(19) Europäisches Patentamt
European Patent Office
Office européen des brevets

(11) EP 3 819 829 A1

(12) EUROPEAN PATENT APPLICATION

(43) Date of publication:
12.05.2021 Bulletin 2021/19

(51) Int Cl.:
G06N 20/00 (2019.01)

(21) Application number: 20205891.3

(22) Date of filing: 05.11.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 07.11.2019 CN 201911081768

(71) Applicant: FUJITSU LIMITED
Kanagawa 211-8588 (JP)

(72) Inventors:
• Zhang, Meng
Beijing, 100027 (CN)
• LI, Fei
Beijing, 100027 (CN)
• Liu, Rujie
Beijing, 100027 (CN)

(74) Representative: Hoffmann Eitle
Patent- und Rechtsanwälte PartmbB
Arabellastraße 30
81925 München (DE)

(54) INFORMATION PROCESSING DEVICE AND METHOD, AND DEVICE FOR CLASSIFYING WITH MODEL

(57) An information processing device and method, and a device for classifying with a model are provided. The information processing device includes a first training unit, a second training unit and a third training unit. The first training unit is configured to train a first model using a first training sample set, to obtain a trained first model. The second training unit is configured to train the trained first model using a second training sample set while maintaining a predetermined portion of characteristics of the trained first model, to obtain a trained second model. The third training unit is configured to train a third model using the second training sample set while causing a difference between classification performances of the trained second model and the third model to be within a first predetermined range, to obtain a trained third model as a final model. Each of the first model, the trained first model, the trained second model and the third model includes at least one feature extraction layer.

Figure 5

**Description**

**FIELD**

The present disclosure relates to the field of information processing, and in particular to an information processing device and method, and a device for classifying with a model.

**BACKGROUND**

In the field of information processing, a new model obtained by training a trained original model using a new training sample set may lose performance of the original model, which is referred to as catastrophic forgetting.

**SUMMARY**

A brief summary of the present disclosure is given in the following, so as to provide basic understanding on some aspects of the present disclosure. It should be understood that, this summary is not an exhaustive summary of the present disclosure. The summary is neither intended to determine key or important parts of the present disclosure, nor intended to limit the scope of the present disclosure. An object of the summary is to provide some concepts in a simplified form, as preamble of a detailed description later.

In view of the above problems, an object of the present disclosure is to provide an information processing device, an information processing method and a device for classifying with a model, which are capable of solving one or more problems in the prior art.

An information processing device is provided according to an aspect of the present disclosure. The information processing device includes a first training unit, a second training unit and a third training unit. The first training unit is configured to perform first training processing, in which the first training unit trains a first model using a first training sample set, to obtain a trained first model. The second training unit is configured to perform second training processing, in which the second training unit trains the trained first model using a second training sample set while maintaining a predetermined portion of characteristics of the trained first model, to obtain a trained second model. The third training unit is configured to perform third training processing, in which the third training unit trains a third model using the second training sample set while causing a difference between classification performances of the trained second model and the third model to be within a first predetermined range, to obtain a trained third model as a final model. Each of the first model, the trained first model, the trained second model and the third model includes at least one feature extraction layer.

An information processing method is provided according to another aspect of the present disclosure. The method includes a first training step, a second training step and a third training step. In the first training step, a first model is trained using a first training sample set, to obtain a trained first model. In the second training step, the trained first model is trained using a second training sample set while maintaining a predetermined portion of characteristics of the trained first model, to obtain a trained second model. In the third training step, a third model is trained using the second training sample set while causing a difference between classification performances of the trained second model and the third model to be within a first predetermined range, to obtain a trained third model as a final model. Each of the first model, the trained first model, the trained second model and the third model includes at least one feature extraction layer.

A device for classifying with the final model obtained by performing training utilizing the above information processing device is provided according to still another aspect of the present disclosure. The device for classifying includes a classifying unit configured to input an object to be classified into the final model and classify the object to be classified based on an output of at least one feature extraction layer of the final model.

A computer program code and a computer program product for performing the method according to the present disclosure, and a computer readable storage medium having the computer program code for performing the method according to the present disclosure recorded therein are further provided according to other aspects of the present disclosure.

Other aspects of embodiments of the present disclosure are given in the following specification, in which a detailed description is used to fully disclose preferred embodiments among the embodiments of the present disclosure without limitations on them.

**BRIEF** DESCRIPTION OF THE DRAWINGS

The present disclosure may be better understood by referring to the detailed descriptions given below in conjunction with the drawings. Same or similar reference numerals are used to represent the same or similar components in the drawings. The drawings, together with the following detail descriptions, are included in the specification and form a part of the specification, to further exemplify preferred embodiments of the present disclosure and to explain principles and advantages of the present disclosure. In the drawings:

Figure 1 is a block diagram showing an example of functional configuration of an information processing device according to an embodiment of the present disclosure;

Figure 2 shows an example of first training processing performed by a first training unit of the information processing device according to an embodiment of the present disclosure;

Figure 3 shows an example of second training processing performed by a second training unit of the information processing device according to an embodiment of the present disclosure;

Figure 4 shows an example of third training processing performed by a third training unit of the information processing device according to an embodiment of the present disclosure;

Figure 5 is a flowchart showing an example of a flow of an information processing method according to an embodiment of the present disclosure;

Figure 6 is a block diagram showing a device for classifying with a final model according to an embodiment of the present disclosure;

Figure 7 is a flowchart showing an example of a flow of a method for classifying with a final model according to an embodiment of the present disclosure; and

Figure 8 is a block diagram showing an exemplary structure of a personal computer that may be applied to embodiments of the present disclosure.

## DETAILED DESCRIPTION OF EMBODIMENTS

Exemplary embodiments of the present disclosure are described below in conjunction with the drawings. For conciseness and clarity, not all features of an actual embodiment are described in this specification. However, it should be understood that numerous embodiment-specific decisions, for example, in accordance with constraining conditions related to system and business, should be made when developing any of such actual embodiments, so as to achieve specific targets of a developer. These constraining conditions may vary with different embodiments. Furthermore, it should be understood that although development work may be complicated and time-consuming, for those skilled in the art benefiting from the present disclosure, such development work is only a routine task.

Here, it should further be noted that in order to avoid obscuring the present disclosure due to unnecessary details, only an apparatus structure and/or processing step closely related to the solutions according to the present disclosure are illustrated in the drawings, and other details less related to the present disclosure are omitted.

Embodiments of the present disclosure are described in detail below in conjunction with the drawings.

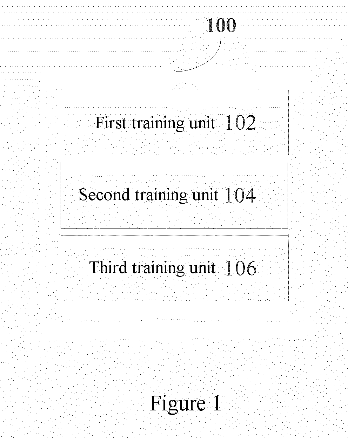

An example of functional configuration of an information processing device according to an embodiment of the present disclosure will be described referring to Figure 1, which is a block diagram showing an example of functional configuration of the information processing device according to an embodiment of the present disclosure. As shown in Figure 1, an information processing device 100 according to an embodiment of the present disclosure may include a first training unit 102, a second training unit 104 and a third training unit 106.

The first training unit 102 may be configured to perform first training processing. In the first training processing, the first training unit 102 may train a first model using a first training sample set, to obtain a trained first model.

The second training unit 104 may be configured to perform second training processing. In the second training processing, the second training unit 104 may train the trained first model using a second training sample set while maintaining a predetermined portion of characteristics of the trained first model, to obtain a trained second model.

In an example, the number of samples included in the first training sample set may be greater than the number of samples included in the second training sample set. However, the present disclosure is not limited to this example. For example, the number of samples included in the first training sample set may be equal to or less than the number of samples included in the second training sample set.

By way of illustration rather than limitation, at least a part of samples in the second training sample set may be included in the first training sample set. However, the present disclosure is not limited hereto. For example, samples in the first training sample set are all different from samples in the second training sample set.

The third training unit 106 may be configured to perform third training processing. In the third training processing, the third training unit 106 may train a third model using the second training sample set while causing a difference between classification performances of the trained second model and the third model to be within a predetermined range, to obtain a trained third model as a final model. Each of the first model, the trained first model, the trained second model and the third model includes at least one feature extraction layer.

By way of illustration rather than limitation, initial structural parameters of the third model are identical to structural parameters of the trained second model.

For example, each of the first model (and the trained first model and the trained second model correspondingly) and the third model (and the final model correspondingly) may be but is not limited to a neural network model such as a convolutional neural network model (for example, an ResNet, a GoogleNet and a denseNet), a Hopfield neural network model and a bidirectional associative memory (BAM) neural network model. Those skilled in the art may select a proper model according to actual needs, which is not described herein.

In an example, a type of the third model (and the final model correspondingly) may be the same as that of the first model (and the trained first model and the trained second model correspondingly). In addition, the type of the third model (and the final model correspondingly) may be different from that of the first model (and the trained first model and the trained second model correspondingly).

In the second training processing, the maintaining a predetermined portion of characteristics of the trained first model may include fixing at least a part of parameters of the trained first model. For example, the trained first model may be a convolutional neural network model including at least one convolutional layer and a fully connected layer as feature extraction layers. In this case, the maintaining a predetermined portion of characteristics of the trained first model may include fixing parameters of a part of convolutional layers of the trained first model. Preferably, in the exemplary case that the trained first model is the above convolutional neural network model, the maintaining a predetermined portion of characteristics of the trained first model may include fixing parameters of all of the layers other than the fully connected layer of the trained first model.

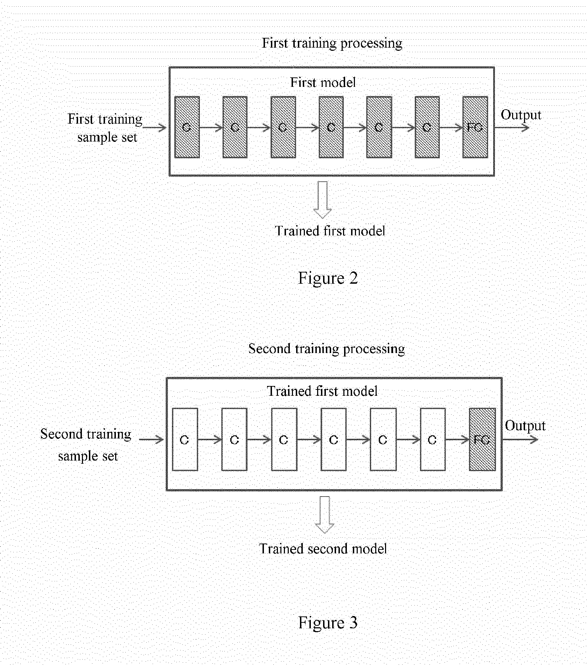

Figure 2 and Figure 3 show an example of first training processing performed by the first training unit 102 of the information processing device 100 according to the embodiment of the disclosure and an example of second training processing performed by the second training unit 104 of the information processing device 100, respectively. In Figure 2 and Figure 3, slashed boxes represent structures whose parameters can be changed during training. As shown in Figure 2 and Figure 3, each of the first model and the trained first model is a convolutional neural network model including six convolutional layers (C) and one fully connected layer (FC) as feature extraction layers. In addition, as shown in Figure 3, in the second training processing, the second training unit 104 trains the trained first model using the second training sample set while fixing parameters of the six convolutional layers of the trained first model, to obtain a trained second model.

Further, in the third training processing, the third training unit 106 may train the third model using the second training sample set while causing the difference between the classification performances of the trained second model and the third model to be within a predetermined range and causing the third model to maintain a predetermined portion of characteristics of the trained second model. For example, the maintaining a predetermined portion of characteristics of the trained second model may include causing a part of initial structural parameters of the third model to be identical to corresponding structural parameters of the trained second model and fixing, in the third training processing, a part or all of the part of initial structural parameters of the third model. In addition, the maintaining a predetermined portion of characteristics of the trained second model may include causing a difference between an output of one of feature extraction layers of the trained second model and an output of a corresponding feature extraction layer of the third model with respect to a same sample to be within a predetermined range.

In an example, initial structural parameters of the third model may be identical to structural parameters of the trained second model. In this case, the maintaining a predetermined portion of characteristics of the trained second model may include fixing at least a part of parameters of the third model, and/or causing a difference between an output of one of feature extraction layers of the trained second model and an output of a corresponding feature extraction layer of the third model with respect to a same sample to be within a predetermined range. For example, the third model may be a convolutional neural network model including a fully connected layer and at least one convolutional layer as feature extraction layers. In this case, the maintaining a predetermined portion of characteristics of the trained second model may include fixing parameters of a part of convolutional layers of the third model and/or causing a difference between an output of one convolutional layer or fully connected layer of the trained second model and an output of a corresponding layer of the third model with respect to a same sample to be within a predetermined range. Preferably, in the exemplary case that the third model is the above convolutional neural network model, the maintaining a predetermined portion of characteristics of the trained second model may include fixing parameters of a low level convolutional layer (that is, a convolutional layer away from the fully connected layer) of the third model and/or causing a difference between an output of the fully connected layer of the trained second model and an output of the fully connected layer of the third model with respect to a same sample to be within a predetermined range.

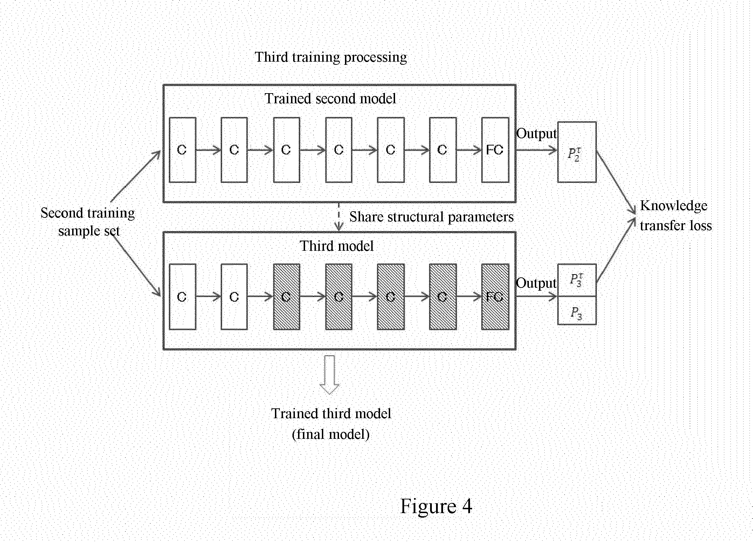

Figure 4 shows an example of the third training processing performed by the third training unit 106 of the information processing device 100 according to an embodiment of the present disclosure. In Figure 4, slashed boxes represent structures whose parameters can be changed during training. As shown in Figure 4, each of the trained second model and the third model is a convolutional neural network model including six convolutional layers (C) and one fully connected layer (FC) as feature extraction layers. Initial structural parameters of the third model are identical to structural parameters of the trained second model. In addition, as shown in Figure 4, in the third training processing, the third training unit 106 trains the third model using the second training sample set while fixing parameters of first two convolutional layers of the third model, to obtain a trained third model.

By way of illustration rather than limitation, the second training processing may include minimizing a loss function for the trained first model. Furthermore, an input of the loss function may be processed so that the trained second model maintains more characteristics of the trained first model. For example, in an exemplary case that the loss function for the trained first model is a softmax function, an input of the softmax function (for example, an output of the trained first model shown in Figure 3) may be divided by an relaxation coefficient $\tau_1$ (where $\tau_1$ is greater than 1, i.e., $\tau_1 > 1$) to reduce a difference between outputs of the softmax function with respect to different inputs, so that the trained second model maintains more characteristics of the trained first model. Those skilled in the art may set the relaxation coefficient $\tau_1$ according to actual needs. A grate value of the relaxation coefficient $\tau_1$ indicates that the trained second model is desired to maintain more characteristics of the trained first model.

By way of illustration rather than limitation, training the third model using the second training sample set may include minimizing a first comprehensive loss function. The first comprehensive loss function is associated with a loss function for the third model and the difference between classification performances of the trained second model the third model.

In an example, the difference between the classification performances of the trained second model and the third model may be calculated based on a knowledge transfer loss between the trained second model and the third model. However, those skilled in the art may calculate the difference between the classification performances of the trained second model and the third model in other manners as needed, which is not described in detail herein.

Specifically, the knowledge transfer loss may be calculated based on a cross-entropy of a value of a loss function for the trained second model and a value of the loss function for the third model. Furthermore, an input of the loss function for the trained second model and an input of the loss function for the third model may be processed, so that the final model maintains more characteristics of the trained second model.

For example, the loss function for the trained second model and the loss function for the third model may be expressed as the following equations (1) and (2), respectively.

$$P_2 = soft\,max(a_2) \qquad \text{equation (1)}$$

$$P_3 = soft\,max(a_3) \qquad \text{equation (2)}$$

In the above equations (1) and (2), $a_2$ and $a_3$ represent an output of the trained second model and an output of the third model, respectively. It should be noted that though the softmax function serves as the loss function for the trained second model and the loss function for the third model in equation (1) and equation (2), the loss functions is not limited to the softmax function. Those skilled in the art may select other loss functions such as a contrast loss and an average error according to actual needs.

An input of the loss function $P_2$ for the trained second model and an input of the loss function $P_3$ for the third model may be processed, so that the final model maintains more characteristics of the trained second model. For example, an input of the loss function $P_2$ and an input of the loss function $P_3$ each may be divided by a relaxation coefficient $\tau_2$ (where $\tau_2$ is greater than 1, i.e., $\tau_2 > 1$), so as to obtain a loss function $P_2^\tau$ and a loss function $P_3^\tau$ expressed as the following equations (3) and (4), respectively.

$$P_2^\tau = soft\,max(\frac{a_2}{\tau_2}) \qquad \text{equation (3)}$$

$$P_3^\tau = soft\,max(\frac{a_3}{\tau_2}) \qquad \text{equation (4)}$$

The knowledge transfer loss between the trained second model and the third model may be expressed as the following equation (5).

$$H(P_2^\tau, P_3^\tau) = -\sum P_2^\tau * log(P_3^\tau) \qquad \text{equation (5)}$$

The first comprehensive loss function $L_1$ may be expressed as the following equation (6).

$$L_1 = P_3 + \lambda_1 H(P_2^\tau, P_3^\tau) \qquad \text{equation (6)}$$

In the above equation (6), $\lambda_1$ (having a value greater than 0) is a knowledge transfer loss coefficient, which is used to balance the loss function $P_3$ for the third model and the knowledge transfer loss. The value of $\lambda_1$ may be set according to actual needs. A great value of $\lambda_1$ indicates that it is desired to obtain a small difference between classification performances of the trained second model and the final model.

It should be noted that the knowledge transfer loss between the trained second model and the third model is calculated based on the cross-entropy of the value of the loss function for the trained second model and the value of the loss function for the third model as described above. However, those skilled in the art may calculate the knowledge transfer loss in other manners. For example, the knowledge transfer loss may be calculated based on an Euclidean distance or cosine distance between the outputs of the loss functions $P_2^\tau$ and $P_3^\tau$.

As described above, in the third training processing, the third training unit 106 may train the third model using the second training sample set while causing the difference between classification performances of the trained second model and the third model to be within the predetermined range and causing the third model to maintain a predetermined portion of characteristics of the trained second model. In addition, the maintaining a predetermined portion of characteristics of the trained second model may include: fixing a part of parameters of the third model, and/or causing a difference between an output of one of feature extraction layers of the trained second model and an output of a corresponding feature extraction layer of the third model with respect to a same sample to be within a predetermined range. In a case that the maintaining a predetermined portion of characteristics of the trained second model includes causing a difference between an output of one of feature extraction layers of the trained second model and an output of a corresponding feature extraction layer of the third model with respect to a same sample to be within a predetermined range, the training the third model using the second training sample set may include minimizing a second comprehensive loss function. The second comprehensive loss function is associated with the difference between classification performances of the trained second model and the third model, the loss function for the third model and the difference between an output of one of feature extraction layers of the trained second model and an output of a corresponding feature extraction layer of the third model with respect to a same sample. For example, the second loss function may be expressed as the following equation (7).

$$L_2 = P_3 + \lambda_1 H(P_2^\tau, P_3^\tau) + \lambda_2 L_F \qquad \text{equation (7)}$$

In the above equation (7), $L_F$ represents the difference between the output of one of feature extraction layers of the trained second model and the output of a corresponding feature extraction layer of the third model, and may be obtained based on an absolute value $|F_2-F_3|$ of a difference between an output $F_2$ of one of feature extraction layers of the trained second model and an output $F_3$ of a corresponding feature extraction layer of the third model. However, a manner for obtaining $L_F$ is not limited to the above. Those skilled in the art may select a proper manner to obtain $L_F$ according to actual needs. $\lambda_2$ (having a value greater than 0) is a feature difference coefficient and the value of $\lambda_2$ may be set according to actual needs. A great value of $\lambda_2$ indicates that it is desired to obtain a small difference between an output of a feature extraction layer of the trained second model and an output of a corresponding feature extraction layer of the final model.

In the field of information processing, catastrophic forgetting may occur in a new model obtained by training a trained original model using a new training sample set. That is, the new model may lose performance of the original model. The information processing device according to the embodiment of the present disclosure trains a trained first model using a second training sample set while maintaining a predetermined portion of characteristics of the trained first model obtained by training a first model using a first training sample set, to obtain a trained second model, and trains a third model using the second training sample set while causing a difference between classification performances of the trained second model and the third model to be within a predetermined range, to obtain a trained third model as a final model, so that the final model can maintain classification performance of the trained first model well. The information processing device according to the embodiment of the present disclosure can be applied widely.

For example, in the field of face recognition, most of conventional training methods are designed for training sample sets with sufficient depth (numerous samples for each class) and limited breadth (a relatively small number of classes). However, these methods meet great challenges on ID versus Spot (IvS), since a training sample set for the IvS generally only includes a few images for each class. In recent years, numerous high-quality sample sets of celebrity face images are released, such as MegaFace and MS-Celeb-1M. However, a scenario in which these sample sets are collected is quite different from a scenario in which a training sample set and a classification object for the IvS are collected. Therefore, a general model obtained by training with a sample set of celebrity face images has poor classification performance for classification object for the IvS. If the general model is fine-tuned (that is, the general model is trained further) using the training sample set for the IvS, catastrophic forgetting may occur, resulting in poor generality of the obtained model.

Training may be performed by means of the information processing device according to the embodiment of the present disclosure, by using the MegaFace or the MS-Celeb-1M as the first training sample set and using the training sample set for the IvS as the second training sample set, so that the final model obtained thereby has good classification performance for the training sample set for the IvS and has good generality.

In addition, a coarse-grained classification model obtained by performing training using a training sample for coarse-grained classification has poor performance for fine-grained classification. Similarly, a fine-grained classification model obtained by performing training using a training sample set for fine-grained classification has poor performance for coarse-grained classification. Training may be performed by means of the information processing device according to the embodiment of the present disclosure , by using a training sample set for coarse-grained classification (for example, images of various animals) as the first training sample set and using a training sample set for fine-grained classification (for example, images of a certain type of animal such as cats) as the second training sample set, so that the final model obtained thereby has good performance for both the coarse-grained classification and the fine-grained classification.

In addition, for example, the information processing device according to the embodiment of the present disclosure may perform training using samples of a first type of objects (for example, voice based on mandarin) as the first training sample set and using samples of a second type of objects (for example, voice based on certain dialect) as the second training sample set, so that the final model obtained thereby has good classification performance for both the first type of objects and the second type of objects.

It should be noted that though application examples of the information processing device according to the embodiment of the present disclosure have been described above, applications of the information processing device are not limited to those examples. Those skilled in the art may apply the information processing device to various aspects according to the actual needs, which are not described in detail herein.

Corresponding to the above embodiments of the information processing device, the following embodiments of an information processing method are provided according to the present disclosure.

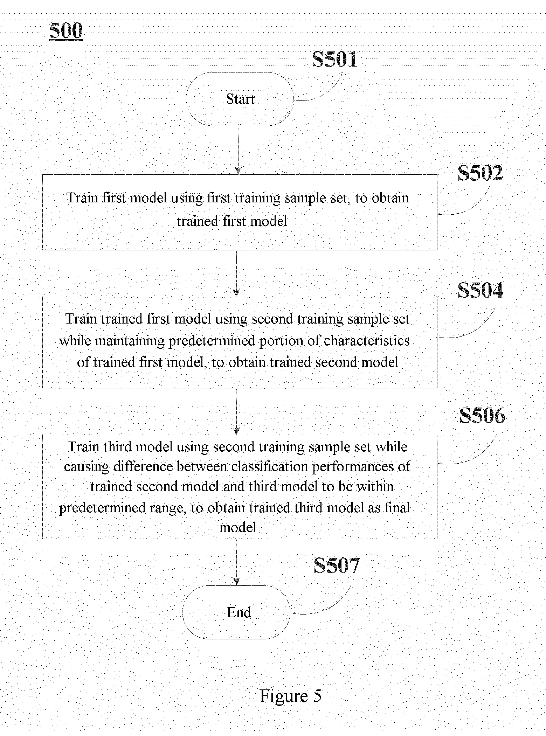

Figure 5 is a flowchart showing an example of a flow of an information processing method 500 according to an embodiment of the present disclosure. As shown in Figure 5, the information processing method 500 according to the embodiment of the present disclosure may include a starting step S501, a first training step S502, a second training step S504, a third training step S506 and an ending step S507.

In the first training step S502, a first model is trained using a first training sample set to obtain a trained first model.

In the second training step S504, the trained first model is trained using a second training sample set while maintaining a predetermined portion of characteristics of the trained first model, to obtain a trained second model.

In an example, the number of samples included in the first training sample set may be greater than the number of samples included in the second training sample set. However, the present disclosure is not limited to this example. For example, the number of samples included in the first training sample set may be equal to or less than the number of samples included in the second training sample set.

By way of illustration rather than limitation, at least a part of samples in the second training sample set may be included in the first training sample set. However, the present disclosure is not limited hereto. For example, samples in the first training sample set are all different from samples in the second training sample set.

In the third training step S506, a third model is trained using the second training sample set while causing a difference between classification performances of the trained second model and the third model to be within a predetermined range, to obtain a trained third model as a final model. Each of the first model, the trained first model, the trained second model and the third model includes at least one feature extraction layer.

By way of illustration rather than limitation, initial structural parameters of the third model are identical to structural parameters of the trained second model.

For example, each of the first model (and the trained first model and the trained second model correspondingly) and the third model (and the final model correspondingly) may be but is not limited to a neural network model such as a convolutional neural network model (for example, an ResNet, a GoogleNet and a denseNet), a Hopfield neural network model and a BAM neural network model. Those skilled in the art may select a proper model according to actual needs.

In an example, a type of the third model (and the final model correspondingly) may be the same as that of the first model (and the trained first model and the trained second model correspondingly). In addition, the type of the third model (and the final model correspondingly) may be different from that of the first model (and the trained first model and the trained second model correspondingly).

In the second training step S504, the maintaining a predetermined portion of characteristics of the trained first model may include fixing at least a part of parameters of the trained first model. For example, the trained first model may be a convolutional neural network model including at least one convolutional layer and a fully connected layer as feature extraction layers. In this case, the maintaining a predetermined portion of characteristics of the trained first model may include fixing parameters of a part of convolutional layers of the trained first model. Preferably, in the exemplary case that the trained first model is the above convolutional neural network model, the maintaining a predetermined portion of characteristics of the trained first model may include fixing parameters of all of the layers other than the fully connected layer of the trained first model.

Further, in the third training step S506, the third model may be trained using the second training sample set while causing the difference between classification performances of the trained second model and the third model to be within a predetermined range and causing the third model to maintain a predetermined portion of characteristics of the trained second model. For example, the maintaining a predetermined portion of characteristics of the trained second model may include causing a part of initial structural parameters of the third model to be identical to corresponding structural parameters of the trained second model and fixing, in the third training step S506, a part or all of the part of initial structural parameters of the third model. In addition, the maintaining a predetermined portion of characteristics of the trained second model may include causing a difference between an output of one of feature extraction layers of the trained second model and an output of a corresponding feature extraction layer of the third model with respect to a same sample to be within a predetermined range.

In an example, initial structural parameters of the third model may be identical to structural parameters of the trained second model. In this case, the maintaining a predetermined portion of characteristics of the trained second model may include fixing at least a part of parameters of the third model, and/or causing a difference between an output of one of feature extraction layers of the trained second model and an output of a corresponding feature extraction layer of the third model with respect to a same sample to be within a predetermined range. For example, the third model may be a convolutional neural network model including a fully connected layer and at least one convolutional layer as feature extraction layers. In this case, the maintaining a predetermined portion of characteristics of the trained second model may include fixing parameters of a part of convolutional layers of the third model and/or causing a difference between an output of one convolutional layer or fully connected layer of the trained second model and an output of a corresponding layer of the third model with respect to a same sample to be within a predetermined range. Preferably, in the exemplary case that the third model is the above convolutional neural network model , the maintaining a predetermined portion of characteristics of the trained second model may include fixing parameters of a low level convolutional layer (that is, a convolutional layer away from the fully connected layer) of the third model and/or causing a difference between an output of the fully connected layer of the trained second model and an output of the fully connected layer of the third model with respect to a same sample to be within a predetermined range.

By way of illustration rather than limitation, the second training step S504 may include minimizing a loss function for the trained first model. Furthermore, an input of the loss function may be processed so that the trained second model maintains more characteristics of the trained first model. For example, in a case that the loss function for the trained first model is a softmax function, an input of the softmax function may be divided by an relaxation coefficient $\tau_1$ (where $\tau_1$ is greater than 1, i.e., $\tau_1 > 1$) to reduce a difference between outputs of the softmax function with respect to different inputs, so that the trained second model maintains more characteristics of the trained first model.

By way of illustration rather than limitation, training the third model using the second training sample set may include minimizing a first comprehensive loss function. The first comprehensive loss function is associated with a loss function for the third model and the difference between classification performances of the trained second model and the third model.

In an example, the difference between the classification performances of the trained second model and the third model may be calculated based on a knowledge transfer loss between the trained second model and the third model. However, those skilled in the art may calculate the difference between the classification performances of the trained second model and the third model in other manners as needed, which is not described in detail herein.

Specifically, the knowledge transfer loss may be calculated based on a cross-entropy of a value of a loss function for the trained second model and a value of the loss function for the third model. Furthermore, an input of the loss function for the trained second model and an input of the loss function for the third model may be processed, so that the final model maintains more characteristics of the trained second model. For example, as described above for the information processing device 100 shown in Figure 1, the knowledge transfer loss may be calculated from the above equation (5) and the first comprehensive loss function may be expressed as the above equation (6).

As described above for the third training unit 106 of the information processing device 100 shown in Figure 1, in the third training step S506, in a case that the maintaining a predetermined portion of characteristics of the trained second model includes causing a difference between an output of one of feature extraction layers of the trained second model and an output of a corresponding feature extraction layer of the third model with respect to a same sample to be within a predetermined range, the training the third model using the second training sample set may include minimizing a second comprehensive loss function. The second comprehensive loss function is associated with the difference between classification performances of the trained second model and the third model, the loss function for the third model and the difference between an output of one of feature extraction layers of the trained second model and an output of a corresponding feature extraction layer of the third model with respect to a same sample. For example, the second loss function may be expressed as the above equation (7).

With the information processing method according to the embodiment of the present disclosure, a trained first model, which is obtained by training a first model using a first training sample set, is trained using a second training sample set while maintaining a predetermined portion of characteristics of the trained first model, to obtain a trained second model. Further, a third model is trained using the second training sample set while causing a difference between classification performances of the trained second model and the third model to be within a predetermined range, to obtain a trained third model as a final model, so that the final model can maintain classification performance of the trained first model well.

Similar to the information processing device according to the embodiment of the present disclosure, the information processing method according to the embodiment of the present disclosure can be widely applied. For example, training may be performed with the information processing method according to the embodiment of the present disclosure, by using the MegaFace or the MS-Celeb-1M as the first training sample set and using a training sample set for the IvS as the second training sample set, so that the final model obtained thereby has good classification performance for the training sample set for the IvS and has good generality.

In addition, for example, training may be performed with the information processing method according to an embodiment of the present disclosure, by using a training sample set for coarse-grained classification (for example, images of various animals) as the first training sample set and using a training sample set for fine-grained classification (for example, images of a certain type of animal such as cats) as a second training sample set, so that the final model obtained thereby has good performance for both the coarse-grained classification and the fine-grained classification.

In addition, for example, training may be performed with the information processing method according to an embodiment of the present disclosure, by using samples of a first type of objects (for example, voice based on mandarin) as the first training sample set and using samples of a second type of objects (for example, voice based on certain dialect) as the second training sample set, so that the final model obtained thereby has good classification performance for both the first type of objects and the second type of objects.

It should be noted that though application examples of the information processing method according to the embodiment of the present disclosure have been described above, applications of the information processing method are not limited to those examples. Those skilled in the art may apply the information processing method to various aspects according to the actual needs, which are not described in detail herein.

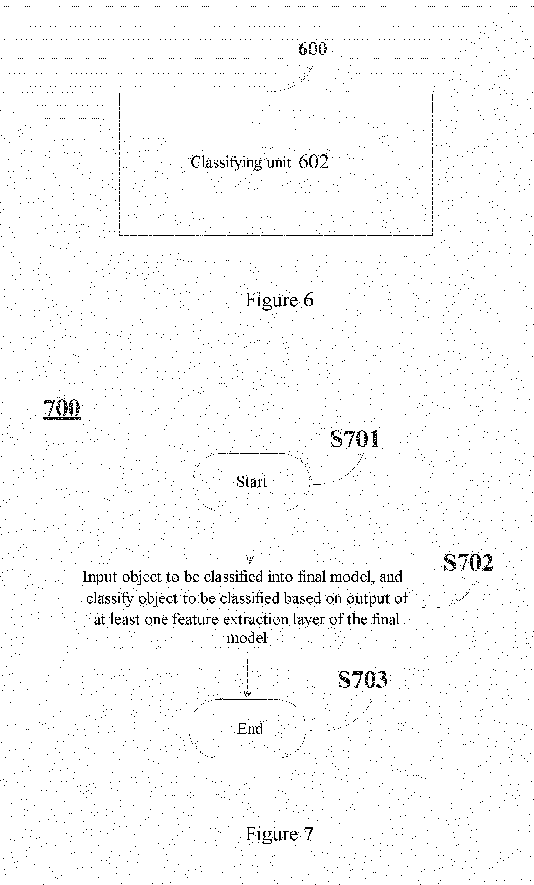

A device for classifying with the final model obtained by performing training utilizing the above information processing device 100 is further provided according to the present disclosure. Figure 6 is a block diagram showing a device for classifying with a final model according to an embodiment of the present disclosure. As shown in Figure 6, a device 600 for classifying with a final model according to the embodiment of the present disclosure may include a classifying unit 602. The classifying unit 602 may be configured to input an object to be classified into a final model obtained by performing training with the information processing device 100, and classify the object to be classified based on an output of at least one feature extraction layer of the final model.

For example, the device 600 may input multiple objects into the final model in advance, to obtain outputs of the feature extraction layer with respect to the multiple objects. In this case, the classifying unit 602 may input the object to be classified into the final model and classify the object to be classified based on a comparison between an output of at least one of the feature extraction layers with respect to the object to be classified and an output of the feature extraction layer with respect to each of the multiple objects. For example, the classifying unit 602 may determine the object to be classified as an object with a minimum difference between an output of a feature extraction layer with respect to the object to be classified and an output of the feature extraction layer with respect to the object.

In addition, for example, the classifying unit 602 may input another object into the final model while inputting the object to be classified into the final model. The classifying unit 602 may classify the object to be classified based on a comparison of an output of at least one feature extraction layer with respect to the object to be classified and an output of the feature extraction layer with respect to the other object. For example, the classifying unit 602 may determine the object to be classified as the other object in a case that a difference between the output of a feature extraction layer with respect to the object to be classified and the output of the feature extraction layer with respect to the other object is less than a predetermined threshold.

For example, in a case that the final model is a convolutional neural network model including a fully connected layer and at least one convolutional layer as feature extraction layers, for example, the classifying unit 602 may classify the object to be classified based on an output of the fully connected layer.

Corresponding to the above device for classifying with a final model according to the embodiment of the present disclosure, a method for classifying with a final model is further provided according to an embodiment of the present disclosure. Figure 7 is a flowchart showing an example of a flow of the method for classifying with a final model according to an embodiment of the present disclosure. As shown in Figure 7, the method 700 for classifying with a final model according to the embodiment of the present disclosure may include a starting step S701, a classifying step S702 and an ending step S703. In the classifying step S702, an object to be classified may be inputted into the final model and may be classified based on an output of at least one feature extraction layer of the final model.

For example, multiple objects may be inputted into the final model in advance to obtain outputs of the feature extraction layer with respect to the multiple objects. In this case, in the classifying step S702, the object to be classified may be inputted into the final model and is classified based on a comparison of an output of at least one feature extraction layer with respect to the object to be classified and an output of the feature extraction layer with respect to each of the multiple objects. For example, in the classifying step S702, the object to be classified may be determined as an object with a minimum difference between an output of a feature extraction layer with respect to the object to be classified and an output of the feature extraction layer with respect to the object.

In addition, for example, another object may be inputted into the final model while inputting the object to be classified into the final model. In the classifying step S702, the object to be classified may be classified based on a comparison of an output of at least one feature extraction layer with respect to the object to be classified and an output of the feature extraction layer with respect to the other object. For example, in the classifying step S702, the object to be classified may be determined as the other object in a case that a difference between the output of a feature extraction layer with respect to the object to be classified and the output of the feature extraction layer with respect to the other object is less than a predetermined threshold.

For example, in a case that the final model is a convolutional neural network model including a fully connected layer and at least one convolutional layer as feature extraction layers, for example, the object to be classified may be classified based on an output of the fully connected layer in the classifying step S702.

It should be noted that though functional configurations and operations of the information processing device, the information processing method, the device for classifying with a model and the method for classifying with a model according to the embodiments of the present disclosure have been described above, the above descriptions are merely illustrative rather than restrictive. Those skilled in the art may modify the above embodiments based on principles of the present disclosure. For example, those skilled in the art may add, delete or combine functional modules in the above embodiments. Such modifications fall within the scope of the present disclosure.

It should further be noted that the method embodiments herein correspond to the above device embodiments. Therefore, details not described in the method embodiments may refer to corresponding parts in the device embodiments, and are not repeated here.

It should be understood that machine executable instructions in a storage medium and a program product according to embodiments of the present disclosure may further be configured to perform the above classification method. Therefore, details not described here may refer to corresponding parts in the above, and are not repeated here.

Accordingly, a storage medium for carrying the program product including machine executable instructions is also included in the present disclosure. The storage medium includes but is not limited to a floppy disk, an optical disk, a magneto-optical disk, a memory card, a memory stick and the like.

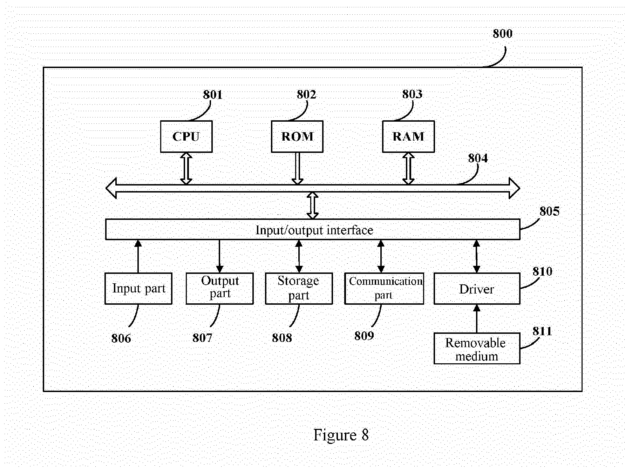

In addition, it should further be pointed out that the above series of processing and devices may also be implemented by software and/or firmware. In a case that the above series of processing and apparatuses are implemented by software and/or firmware, a program constituting the software is installed from a storage medium or network to a computer with a dedicated hardware structure, for example, a general-purpose personal computer 800 shown in Figure 8. The computer can perform various functions when being installed with various programs.

In Figure 8, a central processing unit (CPU) 801 executes various processing according to a program stored in a read-only memory (ROM) 802 or a program loaded from a storage part 808 to a random access memory (RAM) 803. Data required when the CPU 801 performs various processing is also stored in the RAM 803 as needed

The CPU 801, the ROM 802 and the RAM 803 are connected each other via a bus 804. An input/output interface 805 is also connected to the bus 804.

The following parts are connected to the input/output interface 805: an input part 806 including a keyboard, a mouse and the like; an output part 807 including a display such as a cathode ray tube (CRT) and a liquid crystal display (LCD), a loudspeaker and the like; a storage part 808 including a hard disk and the like; and a communication part 809 including a network interface card such as a local area network (LAN) card, a modem and the like. The communication part 809 performs communication processing via a network such as the Internet.

A driver 810 may also be connected to the input/output interface 805 as needed. A removable medium 811 such as a magnetic disk, an optical disk, a magneto-optical disk, and a semiconductor memory is mounted on the driver 810 as needed, so that a computer program read from the removable medium 811 is installed in the storage part 808 as needed.

In a case that the above series of processing is implemented by software, the program constituting the software is installed from the network such as the Internet or the storage medium such as the removable medium 811.

Those skilled in the art should understand that the storage medium is not limited to the removable medium 811 shown in Figure 8 that has the program stored therein and is distributed separately from the device so as to provide the program to the user. Examples of the removable medium 811 include a magnetic disk (including a floppy disk (registered trademark)), an optical disk (including a compact disk read only memory (CD-ROM) and a digital versatile disc (DVD)), a magneto-optical disk (including a MiniDisc (MD) (registered trademark)), and a semiconductor memory. Alternatively, the storage medium may be the ROM 802, a hard disk included in the storage part 808 or the like. The storage medium has a program stored therein and is distributed to the user together with a device in which the storage medium is included.

Preferred embodiments of the present disclosure have been described above with reference to the drawings. However, the present disclosure is not limited to the above embodiments. Those skilled in the art may obtain various modifications and changes within the scope of the appended claims. It should be understood that those modifications and changes naturally fall within the technical scope of the present disclosure.

For example, multiple functions implemented by one unit in the above embodiments may be implemented by separate devices. Alternatively, multiple functions implemented by multiple units in the above embodiments may be implemented by separate devices, respectively. In addition, one of the above functions may be implemented by multiple units. Of course, such configuration is included in the technical scope of the present disclosure.

In this specification, the steps described in the flowchart include not only processing performed in time series in the described order, but also processing performed in parallel or individually rather than necessarily in time series. Furthermore, the steps performed in time series may be performed in another order appropriately.

In addition, the technology according to the present disclosure may also be configured as follows.

Appendix 1. An information processing device, including:

a first training unit configured to perform first training processing, in which the first training unit trains a first model using a first training sample set, to obtain a trained first model;

a second training unit configured to perform second training processing, in which the second training unit trains the trained first model using a second training sample set while maintaining a predetermined portion of characteristics of the trained first model, to obtain a trained second model; and

a third training unit configured to perform third training processing, in which the third training unit trains a third model using the second training sample set while causing a difference between classification performances of the trained second model and the third model to be within a first predetermined range, to obtain a trained third model as a final model,

where each of the first model, the trained first model, the trained second model and the third model includes at least one feature extraction layer.

Appendix 2. The information processing device according to Appendix 1, where initial structural parameters of the third model are identical to structural parameters of the trained second model.

Appendix 3. The information processing device according to Appendix 1 or 2, where the third training processing includes minimizing a first comprehensive loss function, and the first comprehensive loss function is associated with the difference and a loss function for the third model.

Appendix 4. The information processing device according to Appendix 2, where in the third training processing, the third training unit trains the third model using the second training sample set while causing the difference to be within the first predetermined range and causing the third model to maintain a predetermined portion of characteristics of the trained second model.

Appendix 5. The information processing device according to Appendix 1 or 2, where the maintaining a predetermined portion of characteristics of the trained first model includes fixing at least a part of parameters in the trained first model.

Appendix 6. The information processing device according to Appendix 4, where maintaining a predetermined portion of characteristics of the trained second model includes: fixing at least a part of parameters in the third model, and/or causing a difference between an output of one of feature extraction layers of the trained second model and an output of a corresponding feature extraction layer of the third model with respect to a same sample to be within a second predetermined range.

Appendix 7. The information processing device according to Appendix 1 or 2, where the trained first model is a convolutional neural network model including a fully connected layer and at least one convolutional layer as feature extraction layers, and
where the maintaining a predetermined portion of characteristics of the trained first model includes fixing parameters of a part of convolutional layers of the trained first model.

Appendix 8. The information processing device according to Appendix 7, where the maintaining a predetermined portion of characteristics of the trained first model further includes fixing parameters of all of the layers other than the fully connected layer of the trained first model.

Appendix 9. The information processing device according to Appendix 4, where each of the trained second model and the third model is a convolutional neural network model including a fully connected layer and at least one convolutional layer as feature extraction layers, and where maintaining a predetermined portion of characteristics of the trained second model includes: fixing parameters of a part of convolutional layers of the third model, and/or causing a difference between an output of the fully connected layer of the trained second model and an output of the fully connected layer of the third model with respect to a same sample to be within a second predetermined range.

Appendix 10. The information processing device according to Appendix 1 or 2, where the number of samples included in the first training sample set is greater than the number of samples included in the second training sample set.

Appendix 11. The information processing device according to Appendix 10, where at least a part of samples in the second training sample set are included in the first training sample set.

Appendix 12. The information processing device according to Appendix 1 or 2, where samples in the first training sample set are all different from samples in the second training sample set.

Appendix 13. The information processing device according to Appendix 1 or 2, where the second training processing includes minimizing a loss function for the trained first model, and where an input of the loss function is processed so that the trained second model maintains more characteristics of the trained first model.

Appendix 14. The information processing device according to Appendix 1 or 2, where the difference between the classification performances of the trained second model and the third model is calculated based on a knowledge transfer loss between the trained second model and the third model.

Appendix 15. The information processing device according to Appendix 14, where the knowledge transfer loss is calculated based on a cross-entropy of a value of a loss function for the trained second model and a value of the loss function for the third model, and where an input of the loss function for the trained second model and an input of the loss function for the third model are processed, so that the final model maintains more characteristics of the trained second model.

Appendix 16. An information processing method, including:

a first training step for training a first model using a first training sample set, to obtain a trained first model;

a second training step for training the trained first model using a second training sample set while maintaining a predetermined portion of characteristics of the trained first model, to obtain a trained second model; and

a third training step for training a third model using the second training sample set while causing a difference between classification performances of the trained second model and the third model to be within a first predetermined range, to obtain a trained third model as a final model,

where each of the first model, the trained first model, the trained second model and the third model includes at least one feature extraction layer.

Appendix 17. The information processing method according to Appendix 16, where initial structural parameters of the third model are identical to structural parameters of the trained second model.

Appendix 18. The information processing method according to Appendix 16 or 17, where in the third training step, the third model is trained using the second training sample set while causing the difference to be within the first predetermined range and causing the third model to maintain a predetermined portion of characteristics of the trained second model.

Appendix 19. The information processing method according to Appendix 16 or 17, where the maintaining a predetermined portion of characteristics of the trained first model includes fixing at least a part of parameters of the trained first model.

Appendix 20. A device for classifying with the final model obtained by performing training utilizing the information processing device according to any one of Appendix 1 to 15, the device for classifying including:
a classifying unit configured to input an object to be classified into the final model, and to classify the object to be classified based on an output of at least one feature extraction layer of the final model.

**Claims**

1. An information processing device, comprising:

   a first training unit configured to perform first training processing, in which the first training unit trains a first model using a first training sample set, to obtain a trained first model;
   a second training unit configured to perform second training processing, in which the second training unit trains the trained first model using a second training sample set while maintaining a predetermined portion of characteristics of the trained first model, to obtain a trained second model; and
   a third training unit configured to perform third training processing, in which the third training unit trains a third model using the second training sample set while causing a difference between classification performances of the trained second model and the third model to be within a first predetermined range, to obtain a trained third model as a final model,
   wherein each of the first model, the trained first model, the trained second model and the third model comprises at least one feature extraction layer.

2. The information processing device according to claim 1, wherein initial structural parameters of the third model are identical to structural parameters of the trained second model.

3. The information processing device according to claim 1 or 2, wherein the third training processing comprises minimizing a first comprehensive loss function, and the first comprehensive loss function is associated with the difference and a loss function for the third model.

4. The information processing device according to claim 1 or 2, wherein in the third training processing, the third training unit trains the third model using the second training sample set while causing the difference to be within the first predetermined range and causing the third model to maintain a predetermined portion of characteristics of the trained second model.

5. The information processing device according to claim 1 or 2, wherein the maintaining a predetermined portion of characteristics of the trained first model comprises fixing at least a part of parameters of the trained first model.

6. The information processing device according to claim 4, wherein maintaining a predetermined portion of characteristics of the trained second model comprises: fixing at least a part of parameters of the third model, and/or causing a difference between an output of one of feature extraction layers of the trained second model and an output of a corresponding feature extraction layer of the third model with respect to a same sample to be within a second predetermined range.

7. The information processing device according to claim 1 or 2, wherein the trained first model is a convolutional neural network model comprising a fully connected layer and at least one convolutional layer as feature extraction layers, and wherein

the maintaining a predetermined portion of characteristics of the trained first model comprises fixing parameters of a part of convolutional layers of the trained first model.

8. The information processing device according to claim 7, wherein the maintaining a predetermined portion of characteristics of the trained first model further comprises fixing parameters of all of the layers other than the fully connected layer of the trained first model.

9. The information processing device according to claim 4, wherein each of the trained second model and the third model is a convolutional neural network model comprising a fully connected layer and at least one convolutional layer as feature extraction layers, and maintaining a predetermined portion of characteristics of the trained second model comprises: fixing parameters of a part of convolutional layers of the third model, and/or causing a difference between an output of the fully connected layer of the trained second model and an output of the fully connected layer of the third model with respect to a same sample to be within a second predetermined range.

10. The information processing device according to claim 1 or 2, wherein the number of samples comprised in the first training sample set is greater than the number of samples comprised in the second training sample set.

11. The information processing device according to claim 10, wherein at least a part of samples in the second training sample set are comprised in the first training sample set.

12. The information processing device according to claim 1 or 2, wherein the second training processing comprises minimizing a loss function for the trained first model, and wherein an input of the loss function is processed so that the trained second model maintains more characteristics of the trained first model.

13. The information processing device according to claim 1 or 2, wherein the difference between the classification performances of the trained second model and the third model is calculated based on a knowledge transfer loss between the trained second model and the third model.

14. An information processing method, comprising:

   training a first model using a first training sample set, to obtain a trained first model;
   training the trained first model using a second training sample set while maintaining a predetermined portion of characteristics of the trained first model, to obtain a trained second model; and
   training a third model using the second training sample set while causing a difference between classification performances of the trained second model and the third model to be within a first predetermined range, to obtain a trained third model as a final model,
   wherein each of the first model, the trained first model, the trained second model and the third model comprises at least one feature extraction layer.

15. A device for classifying with the final model obtained by performing training utilizing the information processing device according to any one of claims 1 to 13, the device for classifying comprising:
   a classifying unit configured to input an object to be classified into the final model, and to classify the object to be classified based on an output of at least one feature extraction layer of the final model.

100

First training unit 102

Second training unit 104

Third training unit 106

Figure 1

First training processing

First model

First training
sample set

C → C → C → C → C → C → FC

Output

Trained first model

Figure 2

Second training processing

Trained first model

Second training
sample set

C → C → C → C → C → C → FC

Output

Trained second model

Figure 3

Figure 4

500

S501

Start

S502

Train first model using first training sample set, to obtain trained first model

S504

Train trained first model using second training sample set while maintaining predetermined portion of characteristics of trained first model, to obtain trained second model

S506

Train third model using second training sample set while causing difference between classification performances of trained second model and third model to be within predetermined range, to obtain trained third model as final model

S507

End

Figure 5

600

Classifying unit 602

Figure 6

700

**S701**

Start

Input object to be classified into final model, and classify object to be classified based on output of at least one feature extraction layer of the final model

**S702**

**S703**

End

Figure 7

Figure 8

Europäisches
Patentamt

European
Patent Office

Office européen
des brevets

# EUROPEAN SEARCH REPORT

Application Number

EP 20 20 5891

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHMELKOV KONSTANTIN ET AL: "Incremental Learning of Object Detectors without Catastrophic Forgetting", 2017 IEEE INTERNATIONAL CONFERENCE ON COMPUTER VISION (ICCV), IEEE, 22 October 2017 (2017-10-22), pages 3420-3429, XP033283211, DOI: 10.1109/ICCV.2017.368 [retrieved on 2017-12-22] * section 3; figure 2 * | 1-15 | INV. G06N20/00 |
| A | CASTRO FRANCISCO M ET AL: "End-to-End Incremental Learning", 6 October 2018 (2018-10-06), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 241 - 2, XP047488432, ISBN: 978-3-642-17318-9 [retrieved on 2018-10-06] * sections 1, 2 * | 1-15 | |

TECHNICAL FIELDS SEARCHED (IPC)

G06N
G06F

The present search report has been drawn up for all claims

| Place of search | Date of completion of the search | Examiner |
|---|---|---|
| Berlin | 26 March 2021 | Domingo Vecchioni, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)